# EUROPEAN PATENT APPLICATION

(11) **EP 4 773 257 A1**
(43) Date of publication of application: **08.07.2026**
(21) Application number: 25222333.4
(22) Date of filing: 10.12.2025
(51) Int. Cl.: H01M 4/70, H01M 10/0587, H01M 50/533, H01M 50/538

(54) **HEMMED TABLESS ELECTRODE FOR ENERGY STORAGE DEVICES AND METHOD OF PREPARING A HEMMED ELECTRODE**

(30) Priority: 06.01.2025 US 202519011086
(71) Applicant: Tesla, Inc., Austin, TX 78725 (US)
(72) Inventor: PATEL, Krupal, Austin, 78725 (US); RAJCZAKOWSKI, Pawel, Austin, 78725 (US); PENG, Vincent Jen-Bang, Austin, 78725 (US); PIRES, Andrew, Austin, 78725 (US)
(74) Representative: Zacco Sweden AB

(57) **Abstract**

Generally described, one or more aspects of the present disclosure relate to methods, systems, and devices related to forming a wound electrode assembly including a hemmed electrode and a separator, the hemmed electrode including an electrode film and a foil. The foil can include a core edge, a can edge, and a hemmed edge disposed between the core and can edges and extending from the core edge to the can edge. The electrode film can be disposed over the foil and the hemmed edge can extend beyond a top edge of the electrode film. The hemmed electrode can be wound to form a wound hemmed electrode assembly.

## Description

### PRIORITY APPLICATIONS

This application claims the benefit of priority to U.S. Patent Application No. 19/011,086, entitled "HEMMED TABLESS ELECTRODES FOR ENERGY STORAGE DEVICES, AND METHODS THEREOF," filed on January 6, 2025.

### BACKGROUND

### Field

The present disclosure relates to energy storage devices and methods of making thereof. More specifically, the present disclosure relates to hemmed energy storage devices.

### Description of the Related Art

Many types of energy storage devices are currently used, including a "jellyroll" design in which the cathode, anode, and separators are rolled together. In order to make electrical contact with the electrodes and the exterior of the energy storage device housing, electrode tabs electrically connect the electrodes to exterior terminals of the housing. However, forming tabs in an electrode can increase manufacturing costs and present manufacturing challenges. Furthermore, because the tabs are additional components, they add additional thickness to the device and must themselves be rolled into the wound electrode or "jellyroll", they increase costs and present manufacturing challenges.

### SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In some aspects, an energy storage device is described. The energy storage device comprises a wound hemmed electrode assembly comprising a hemmed electrode and a separator. The hemmed electrode including a foil comprising a hemmed edge, an electrode film disposed over the foil, and a central core surrounded by the electrode film, where a proceeding winding of the hemmed edge contacts a succeeding winding of the hemmed edge. The energy storage device further comprises a housing, where the wound hemmed electrode assembly is positioned within the housing, and collector, wherein the collector is in electrical communication and mechanically attached to the hemmed edge.

In some aspects, a hemmed electrode is described. The hemmed electrode comprising an electrode film, and a foil, where the electrode film is disposed over the foil, the foil comprises a core edge, a can edge, and a hemmed edge disposed between the core and can edges, and the hemmed edge extends beyond a top edge of the electrode film.

In some embodiments, the hemmed edge extends from the core edge to the can edge. In some embodiments, the hemmed edge comprises a teardrop shaped loop. In some embodiments, the teardrop shaped loop is bent in a first direction. In some embodiments, the hemmed edge comprises a first loop and a second loop. In some embodiments, the first loop bends in a first direction and the second loop bends in the first direction. In some embodiments, the first loop bends in a first direction and the second loop bends in a second direction.

In some aspects, an electrode assembly is described. The electrode assembly comprising any of the hemmed electrodes described herein and a second hemmed electrode, where the hemmed edge of the hemmed electrode and a second hemmed edge of the second hemmed electrode are positioned on opposing ends of the electrode assembly.

In some aspects, a wound hemmed electrode assembly is described. The wound hemmed electrode assembly comprising any of the electrode assemblies described herein, where the core edge is positioned at a central core of the wound electrode assembly and the can edge is positioned at an exterior side of the wound electrode assembly.

In some aspects an energy storage device is described. The energy storage device comprising any of the wound hemmed electrode assemblies described herein disposed within a can comprising a lid.

In some embodiments, the energy storage device comprises an insulative tape positioned proximal to the hemmed edge.

In some aspects a method of preparing a hemmed electrode is described. The method comprises providing an electrode comprising an electrode film disposed over a foil, and hemming an edge of the foil to form a hemmed electrode comprising a hemmed edge.

In some embodiments, the hemming is performed by a hemming roller. In some embodiments, the method further comprises winding the hemmed electrode together with separator layers to form a wound hemmed electrode assembly. In some embodiments, the method further comprises forming a hemmed electrode assembly from the hemmed electrode and one or more additional hemmed electrodes, disposing a separator between the hemmed electrode and the one or more additional hemmed electrodes to form a hemmed electrode assembly, winding the hemmed electrode assembly to form a wound hemmed electrode assembly, connecting the hemmed edge to a current collector, and inserting the current collector and the wound hemmed electrode assembly into a housing to form an energy storage device. In some embodiments, the method further comprises flattening the hemmed edge. In some embodiments, the method further comprises simultaneously flattening the hemmed edge of the electrode and a second hemmed edge of the one or more additional hemmed electrodes. In some embodiments, flattening is performed by a method selected from the group consisting of pressing, sliding, rolling, a harmonic flattening tool interface, and combinations thereof. In some embodiments, the method further comprises shaping a core of the wound hemmed electrode assembly.

### BRIEF DESCRIPTION OF THE DRAWINGS

The present inventions are described with reference to the accompanying drawings, in which like reference characters reference like elements, and wherein:
FIG. 1 is a perspective illustration of a wound hemmed electrode assembly, according to some embodiments.
FIG. 2 is a schematic illustration of a partial cross section view of a wound hemmed electrode assembly within an energy storage device, according to some embodiments.
FIG. 3 is a schematic illustration of a partial cross section view of an electrode assembly with a hem of a hemmed electrode, according to some embodiments.
FIG. 4 is a schematic illustration of a partial cross section view of an electrode assembly with another hem of a hemmed electrode, according to some embodiments.
FIG. 5 is a flow chart illustrating a method of preparing a hemmed electrode, according to some embodiments.

### DETAILED DESCRIPTION

The present disclosure relates to energy storage device cells and methods of making cells for energy storage devices, such as a lithium-ion cell having tab-less connections from the electrode to the housing. In one example, within a wound electrode cell design, the negative electrode and/or the positive electrode are formed from foils and electrode films, and are made to include hemmed structures at the edges of the foil for making an electrical connection to the cell terminals. When one or more hemmed electrodes are wound into a wound hemmed electrode assembly (i.e., hemmed jellyroll) configuration, the hems may be compressed such that each hem is in contact with the hem adjacent to it, at the positive and negative ends of the wound hemmed electrode assembly, respectively. The electrode assembly can include two electrodes, for example one anode electrode and one cathode electrode with a separator positioned between the anode electrode and the cathode electrode. In some embodiments, the electrode assembly is formed in a flat state prior to winding with the electrode assembly. The hems may be joined to each other (e.g. form a permanent or semi-permanent connection between adjacently-wrapped foils by pressing, soldering, brazing, ultrasonic welding, laser welding, and/or adhering) and then joined (e.g. form a permanent or semi-permanent connection by pressing, soldering, brazing, ultrasonic welding, laser welding, and/or adhering) to the top and/or bottom electric current-bussing "collectors", at the ends of the battery cell, to form a cylindrical unit. The cylindrical unit may then be loaded into a housing for final processing to complete a lithium-ion battery cell.

In some embodiments, the hemmed electrode can include an electrode film and a foil. The foil can include a core edge, a can edge, and a hemmed edge disposed between the core and can edges and extending from the core edge to the can edge. The core edge can be positioned such that once the electrode is wound, the core edge is positioned at the interior (i.e., core) of the wound hemmed electrode. The can edge can be positioned such that once the electrode is wound, the can edge is positioned at an exterior of the wound hemmed electrode. The electrode film can be disposed over the foil and the hemmed edge can extend beyond a top edge of the electrode film. When forming a wound electrode assembly, for example from the hemmed electrode described herein, the core edge can be positioned at a central core of the wound electrode assembly and the can edge can be positioned at an exterior side of the wound electrode assembly, such that the wound electrode assembly forms a central core with the foil winding around the central core.

Each electrode may have a hem, and the hem can be of any configuration. For example, the hem may have a teardrop shape in the hemmed electrode prior to winding and/or when wound within the wound hemmed electrode. In other embodiments, the hem may include one or more loops, for example two loops. In one embodiment, the hem is spaced apart from the electrode film. In some embodiments, any hem loop configuration could be collapsed to generate more compact or uniform interface geometries.

In some embodiments, each end of the wound electrode assembly (e.g., jellyroll) is capped with an electrical current-bussing "collector". The collector may be a solid circular metallic structure. In other embodiments, the collector may have material removed to decouple axial or torsional stress from the components within the wound hemmed electrode assembly. For example, a set of triangular, circular, square, rectangular, or other geometric forms can be cut out from the collector to provide flexibility under stresses imparted on the battery cell. The collector is electrically and mechanically linked with the hemmed edge. In certain embodiments, a component of the cell housing (e.g., lid or can) is dual-purposed as the collector.

In some embodiments, once a wound hemmed electrode is formed it may be used to form an energy storage device, such as a battery cell. In some embodiments, the hem of the wound electrode is electrically connected (e.g., joined) to a current collector. In some embodiments, the hem may be connected to the collectors by forced contact, solder joint, brazing, ultrasonic welding, laser welding, adhering, and combinations thereof. In some embodiments, the wound hemmed electrode assembly is placed into a can (e.g., housing) and the housing is sealed. In some embodiments, electrolyte is added into the can.

In some embodiments, an energy storage device includes a separator, an anode electrode (e.g., anode wound hemmed electrode), an anode current collector, a cathode electrode (e.g., a cathode wound hemmed electrode), a cathode current collector, an insulator, a lid, an electrolyte, and a can, wherein the electrolyte, separator, anode electrode, cathode electrode, anode current collector, cathode current collector, insulator, and lid are disposed within the housing and the separator is positioned between the anode and cathode electrodes. In some embodiments, insulative tape can be wrapped around the end of the energy storage device proximal to the hemmed edge of the cathode wound hemmed electrode where the cathode wound hemmed electrode contacts the cathode current collector. In some embodiments, the insulative tape can be wrapped around the cathode wound hemmed electrode under the cathode current collector. In some embodiments, the insulative tape can be wrapped around the cathode wound hemmed electrode over the cathode current collector. In some embodiments, insulative tape can be wrapped around the end of the energy storage device proximal to the hemmed edge of the anode wound hemmed electrode where the anode wound hemmed electrode contacts the anode current collector. In some embodiments, the insulative tape can be wrapped around the anode wound hemmed electrode under the anode current collector. In some embodiments, the insulative tape can be wrapped around the anode wound hemmed electrode over the cathode current collector. The insulative tape can advantageously isolate the hem from the cell housing (e.g., can) and advantageously inhibit, prevent or aid in preventing undesired electrical contacts. In some embodiments, an energy storage device is formed by placing an electrolyte, a separator, an anode electrode, and the cathode electrode within a housing, wherein the separator is placed between the anode electrode and the cathode electrode. In some embodiments the energy storage device is a battery cell. In some embodiments the energy storage device is a lithium-ion battery cell. In some embodiments, the energy storage device includes an anode electrode positioned between two cathode electrodes.

Advantageously, the machine for making a hemmed electrode may not necessarily require the use of a tabbing device, slitting device, notching device, flag interleaving device, or debris handling device to eliminate foil near the core and/or can edges, and/or exhaust systems for all of these devices. Thus, in some embodiments the hemmed electrode can reduce overall costs and solve many manufacturing challenges (e.g., reduced equipment complexity, reduced equipment footprint, reduced equipment energy consumption, reduced manufacturing scrap, reduced manufacturing labor requirements, improved manufacturing quality, improved web handling speed and tension control, improved geometric precision, improved electrolyte fill time). In addition, in some embodiments, the hemmed electrode can improve battery performance (e.g., internal electrical resistance) by minimizing geometric bottlenecks (e.g., electron travel distance) from cell terminals and electrochemically-active material sites throughout the electrode assembly. Furthermore, in some embodiments the hemmed electrode can improve battery safety by superior runaway gas egress channels and free internal overhead volumes.

Reference will now be made in detail to specific aspects or features, examples of which are illustrated in the accompanying drawings. Wherever possible, corresponding or similar reference numbers will be used throughout the drawings to refer to the same or corresponding parts.

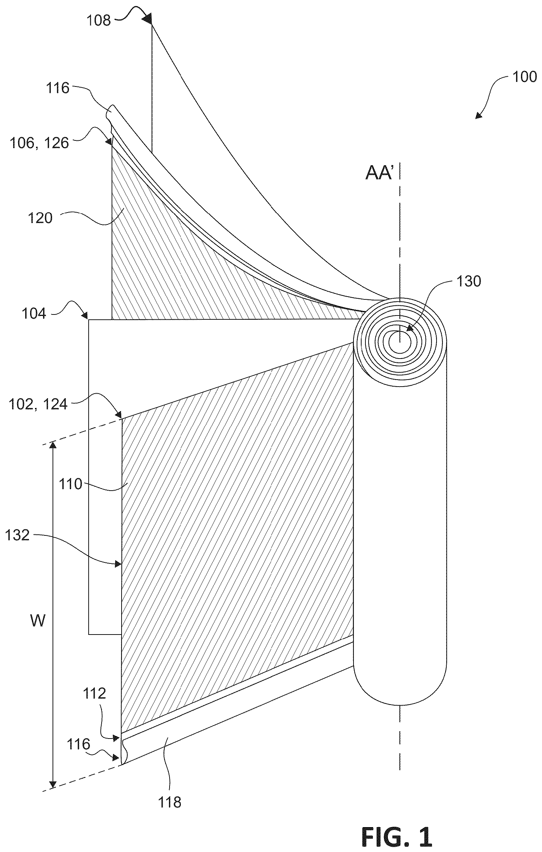

As shown in FIG. 1, an electrode 100 includes a first foil 102 having a first electrode film 110 disposed on a side of the first foil 102. In some embodiments, the first electrode film 110 may be disposed on both sides of the first foil 102 to form a double layered electrode. In some embodiments, the first foil 102 is embodied, preferably, in the form of a laminate that has a pre-determined amount of thickness, for example, in the range of 0.01-1 millimeter (mm). The wound electrode assembly includes a can side 132 and a core side 130. The edge of the can side 132 and the edge of the core side 130 are opposite edges of the first foil 102 and the core side 130 is adjacent to the AA' axis.

In some embodiments, the first electrode film further comprises a binder. In some embodiments, the first electrode film may be disposed on the first foil by any means known to persons skilled in the art. Some examples of disposing the first electrode film onto the first foil include, but are not limited to, mechanical deposition, electromechanical deposition, electrochemical deposition, or any combination of processes known to persons skilled in the art.

Additionally, or optionally, a foil portion 112 of the first foil 102, located partway along a width W of the first foil 102, is formed which includes a lower hem 118. As shown, then the electrode assembly is formed, the lower hem 118 being wound around the central axis AA'. In some embodiments, the lower hem 118 is an exposed region of the first foil 102.

An inner separator 104 is disposed over (e.g. layered with) the first foil 102. In some embodiments, the inner separator 104 is in the form of a laminate that has a pre-determined amount of thickness, for example, in the range of 0.01-0.05 millimeters (mm). In some embodiments to inner separator is or is about 10 µm, 15 µm, 20 µm, 30 µm, 40 µm or 50 µm, or any range of values therebetween (e.g. 10-15 µm). Furthermore, in some embodiments the inner separator 104 is electrically insulative. In some embodiments, the inner separator may comprise a polymeric material. In some embodiments, the inner separator may be selected from polyethylene, polypropylene, or combinations thereof. In some embodiments, the inner separator comprises multiple separator layers. In some embodiments, the inner separator comprises micro-pores.

Further, a second foil 106 is disposed over (e.g. layered with) the inner separator 104. The second foil 106 has a second electrode film 120 disposed on a side of the second foil 106. In some embodiments, the second electrode film 120 may be disposed on both sides of the second foil 106. In some embodiments, the second foil 106 is in the form of a laminate that has a pre-determined amount of thickness, for example, in the range of 0.01-1 millimeter (mm). In some embodiments, the second foil 106 comprises a current collector.

The second electrode film 120 is an electrically conductive coating having a second amount of electrical conductivity. In some embodiments, the electrically conductive coating comprises an electrode active material. In some embodiments, the electrode active material is a cathode active material. In some embodiments, the electrode active material is an anode active material. In certain embodiments, the second electrode film 120 may be similar to or the same as the first electrode film 110 and therefore may have similar or the same electrical conductivity. In certain other embodiments, the second electrode film 120 may be different than the first electrode film 110 and therefore may have different electrical conductivities. In some embodiments, the second electrode film 120 may be disposed on the second foil 106 by any means known to persons skilled in the art. Some examples of disposing the second electrode film 120 onto the second foil 106 include, but are not limited to, mechanical deposition, electromechanical deposition, electrochemical deposition, or any combination of processes known to persons skilled in the art.

An outer separator 108 may be disposed over (e.g. layered with) the second foil 106. In some embodiments, the outer separator 108 is in the form of a laminate that has a pre-determined amount of thickness, for example, in the range of 0.01-0.05 millimeters (mm). Furthermore, the outer separator 108 is electrically insulative. Upon stacking the first foil 102, the inner separator 104, the second foil 106, and the outer separator 108 in a successive manner, the first foil 102, the inner separator 104, the second foil 106, and the outer separator 108 are rolled about a central axis AA' with the first foil 102 being closest in position to the central axis AA'.

As shown, the second foil 106 includes a hem 116. The hem 116 becomes wound around the upper layer of the electrode 100 to so as to form a conductive contact between adjacent surfaces of the hem 116 as the electrode 100 is being created.

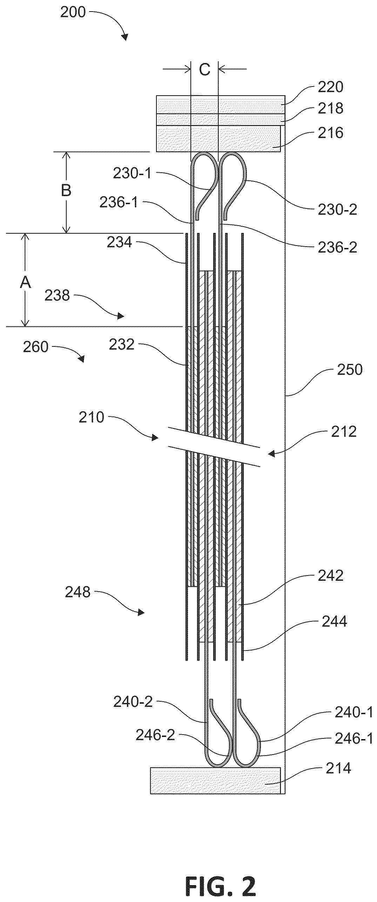

FIG. 2 is a diagram illustrating a partial section view of a wound hemmed electrode assembly 260 within an energy storage device 200. The figure illustrates two layers of a wound hemmed electrode assembly 260. The wound hemmed electrode assembly 260 has a can side 212 and a core side 210. A can 250 is positioned on the can side 212 of the energy storage device 200. The energy storage device 200 includes a first hemmed electrode 238, a second hemmed electrode 248, an anode current collector 214, a cathode current collector 216, an insulator 218, and a lid 220 in some embodiments. The wound hemmed electrode assembly 260 can include any of the features described herein with regard to the hemmed electrodes 300 and 400.

The first hemmed electrode 238 can include a foil 236-1 positioned towards the core side 210 and having an electrode film 232 disposed each side of the foil 236-1 to form a double layered electrode. An inner separator 234 is disposed over (e.g. layered with) the electrode film 232 on each side of the electrode film 232. The foil 236-1 includes a hem 230-1 at a first edge (e.g., a top edge) of the foil 236-1. As illustrated, the hem 230-1 bends towards the can side 212 forming a generally teardrop shaped loop. The first hemmed electrode 238 can also include a foil 236-2 positioned towards the can side 212 and having an electrode film 232 disposed each side of the foil 236-2 to form a double layered electrode. The foils 236-1 and 236-2 are the same layer of foil at different radial positions of the wound hemmed electrode assembly 260 (i.e., as the foil is wound, the foil winds back on itself forming multiple layers). Therefore, the foil 236-1 is a proceeding winding of the wound hemmed electrode assembly 260 and the foil 236-2 is a succeeding winding of the wound hemmed electrode assembly. An inner separator 234 is disposed adjacent to (e.g. layered with) the electrode film 232 on each side of the electrode film 232. The foil 236-2 includes a hem 230-2 at a first edge (e.g., a top edge) of the foil 236-2. As illustrated, the hem 230-2 bends towards the can side 212 forming a generally teardrop shaped loop. The proceeding hem 230-1 contacts the succeeding hem 230-2. The cathode current collector 216 is positioned over the hem 230-1 and the hem 230-2 so that the cathode current collector 216 contacts both the hem 230-1 and the hem 230-2. The insulator 218 is positioned on top of the cathode current collector 216, and the lid 220 is positioned on top of the insulator 218.

The second hemmed electrode 248 can include a foil 246-1 positioned towards the core side 210 and having an electrode film 242 disposed each side of the foil 246-1 to form a double layered electrode. An inner separator 244 is disposed over (e.g. layered with) the electrode film 242 on each side of the electrode film 242. The foil 246-1 includes a hem 240-1 at a first edge (e.g., bottom edge) of the foil 246-1. The first edge of the foil 246-1 is positioned at an opposing end of the energy storage device 200 from the first edge of the foil 236-1. As illustrated, the hem 240-1 bends towards the can side 212 forming a generally teardrop shaped loop. The second hemmed electrode 248 can also include a foil 246-2 positioned towards the can side 212 and having an electrode film 242 disposed each side of the foil 246-2 to form a double layered electrode. The foils 246-1 and 246-2 are the same layer of foil at different winding positions of the wound electrode assembly 260 (i.e., as the foil is wound, the foil winds back on itself forming multiple layers). Therefore, the foil 246-1 is a proceeding winding of the wound hemmed electrode assembly and the foil 246-2 is a succeeding winding of the wound hemmed electrode assembly. An inner separator 244 is disposed over (e.g. layered with) the electrode film 242 on each side of the electrode film 242. The foil 246-2 includes a hem 240-2 at a first edge (e.g., bottom edge) of the foil 246-2As illustrated, the hem 240-2 bends towards the can side 212 forming a generally teardrop shaped loop. The hem 240-1 contacts the hem 240-2. The anode current collector 214 is positioned over the hem 240-1 and the hem 240-2 so that the anode current collector 214 contacts both the hem 240-1 and the hem 240-2.

In some embodiments, the hems bend in the direction of the core side. In some embodiments, the wound hemmed electrode assembly does not include any additional geometries associated with the addition of foil material (e.g. "tabs") or the subtraction of foil material (e.g. "flags"). In some embodiments, the anode current collector and/or cathode current collector is a cell housing element, for example, a lid or a can. In some embodiments, the hem can extend across all or substantially all of the length of the foil. In some embodiments, there is a length of foil (i.e., a designed separation) between the electrode film and the hem. The designed separation can advantageously reduce the thermal exposure of the electrode film. In some embodiments, the length A of the foil between the electrode film and the hem can be about, at least or at least about 0 mm, 0.1 mm, 0.2 mm, 0.3 mm, 0.4 mm, 0.5 mm, 0.6 mm, 0.7 mm, 0.8 mm, 0.9 mm, 1 mm, 1.14 mm, 1.2 mm, 1.3 mm, 14 mm, 1.5 mm, 1.6 mm, 1.7 mm, 1.8 mm, 1.9 mm, 2 mm, or any range therebetween. In some embodiments, the height B of the hemmed loop can be about, at least, or at least about 0.1 mm, 0.2 mm, 0.3 mm, 0.4 mm, 0.5 mm, 0.6 mm, 0.7 mm, 0.8 mm, 0.9 mm, 1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3.0 mm or any range of values therebetween. In some embodiments, the width C of the hemmed loop can be about, at least, or at least about 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, or any range of values therebetween. In some embodiments, the height, width, and/or shape of the hem can vary or change across the length of the electrode. In some embodiments, the current collector can be welded to the hem. The weld of the current collector to the hem can be evaluated via a CT scan or other nondestructive characterization technologies. In some embodiments, the hem has a substantial rectangular shape, a substantially triangular shape, a substantial trapezoidal shape, substantially round shape, or substantially collapsed shape.

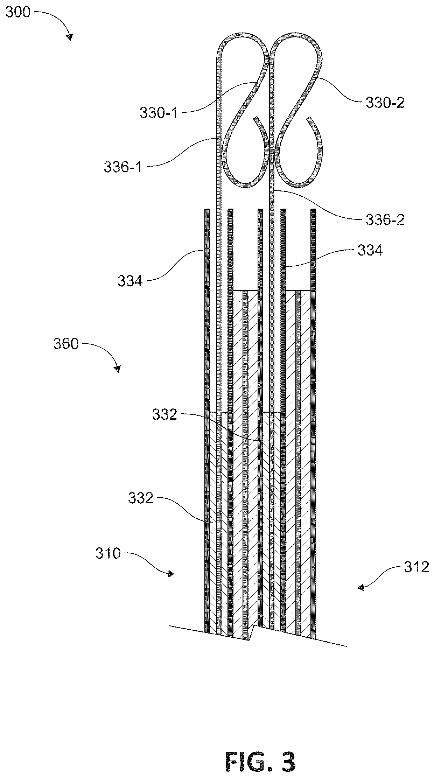

FIG. 3 is a diagram illustrating a partial section view of a wound hemmed electrode assembly 360 with a hemmed electrode 300. The figure illustrates two layers of a wound hemmed electrode 300, however, it should be understood that the wound hemmed electrode 300 can include a plurality of layers to form the wound structure of the wound hemmed electrode 300. Each successive layer can include any of the features and structure described herein. The wound hemmed electrode 300 has a can side 312 and a core side 310.

The hemmed electrode 300 can include a foil 336-1 positioned towards the core side 310 and having an electrode film 332 disposed each side of the foil 336-1 to form a double layered electrode. An inner separator 334 is disposed over (e.g. layered with) the electrode film 332 on each side of the electrode film 332. The foil 336-1 includes a hem 330-1 at a top edge of the foil 336-1. The hem 330-1 includes two loops. As illustrated, the hem 330-1 bends towards the can side 312 forming a first generally teardrop shaped loop, then the hem 230-1 bends back on itself towards the can side 312 to form a second generally teardrop shaped loop. The hemmed electrode 300 can also include a foil 336-2 positioned towards the can side 212 and having an electrode film 332 disposed each side of the foil 336-2 to form a double layered electrode. The foils 336-1 and 336-2 are the same layer of foil at different winding positions of the wound electrode assembly 360 (i.e., as the foil is wound, the foil winds back on itself forming multiple layers). Therefore, the foil 336-1 is a proceeding winding of the wound electrode assembly 360 and the foil 336-2 is a succeeding winding of the wound electrode assembly 360. An inner separator 334 is disposed over (e.g. layered with) the electrode film 332 on each side of the electrode film 332. The foil 336-2 includes a hem 330-2 at a top edge of the foil 336-2. As illustrated, the hem 330-2 bends towards the can side 312 forming a generally teardrop shaped loop, then the hem 230-2 bends back on itself towards the can side 312 to form a second generally teardrop shaped loop. The hem 330-1 may contact the hem 330-2 with either, or both the first and second teardrop shaped loops.

In some embodiments, the hems can bend towards the core side forming a loop, then the hems can bend back on themselves towards the can side to form a second generally teardrop shaped loop. In some embodiments, the hemmed electrode can be an anode hemmed electrode. In some embodiments, the hemmed electrode can be a cathode hemmed electrode.

Advantageously, the hems do not require slits to form the hemmed electrode. This can advantageously increase the structural integrity of the hemmed electrode and mitigate bending and tearing damage under tensile loads introduced throughout the manufacturing process and once the hemmed electrode is formed.

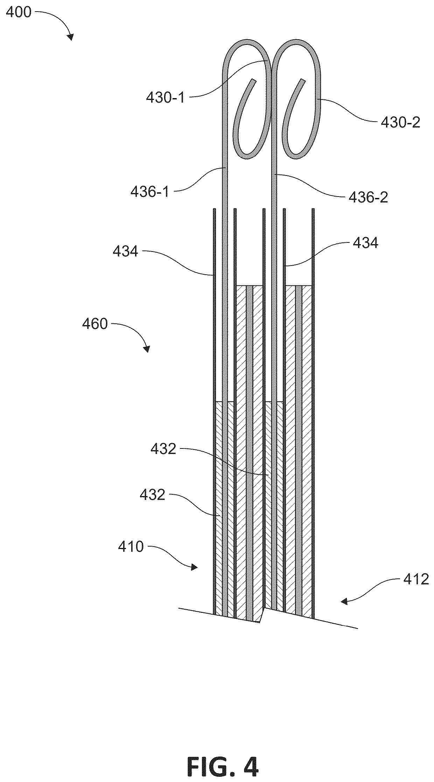

FIG. 4 is a diagram illustrating a partial section view of a hemmed electrode 400. The figure illustrates two layers of a wound hemmed electrode 400 however, it should be understood that the wound hemmed electrode 400 can include a plurality of layers to form the wound structure of the wound hemmed electrode 400. Each successive layer can include any of the features and structure described herein. The wound hemmed electrode 400 has a can side 412 and a core side 410.

The hemmed electrode 400 can include a foil 436-1 positioned towards the core side 410 and having an electrode film 432 disposed each side of the foil 436-1 to form a double layered electrode. An inner separator 434 is disposed over (e.g. layered with) the electrode film 432 on each side of the electrode film 432. The foil 436-1 includes a hem 430-1 at a top edge of the foil 436-1. The hem 430-1 includes two loops. As illustrated, the hem 430-1 bends towards the can side 412 forming a first loop, then the hem 430-1 bends back on itself towards the core side 410 to form a second generally teardrop shaped loop. The hemmed electrode 400 can also include a foil 436-2 positioned towards the can side 412 and having an electrode film 432 disposed each side of the foil 436-2 to form a double layered electrode. The foils 436-1 and 436-2 are the same layer of foil at different winding positions of the wound electrode assembly 460 (i.e., as the foil is wound, the foil winds back on itself forming multiple layers). Therefore, the foil 436-1 is a proceeding winding of the wound electrode assembly and the foil 436-2 is a succeeding winding of the wound electrode assembly. An inner separator 434 is disposed over (e.g. layered with) the electrode film 432 on each side of the electrode film 432. The foil 436-2 includes a hem 430-2 at a top edge of the foil 436-2. As illustrated, the hem 430-2 bends towards the can side 412 forming a loop, then the hem 430-2 bends back on itself towards the core side 410 to form a second generally teardrop shaped loop. The hem 430-1 may contact the hem 430-2 with either, or both the first and second teardrop shaped loops.

In some embodiments, the hems can bend towards the core side forming a loop, then the hems can bend back on themselves towards the core side to form a second generally teardrop shaped loop. In some embodiments, the hemmed electrode can be an anode hemmed electrode. In some embodiments, the hemmed electrode can be a cathode hemmed electrode.

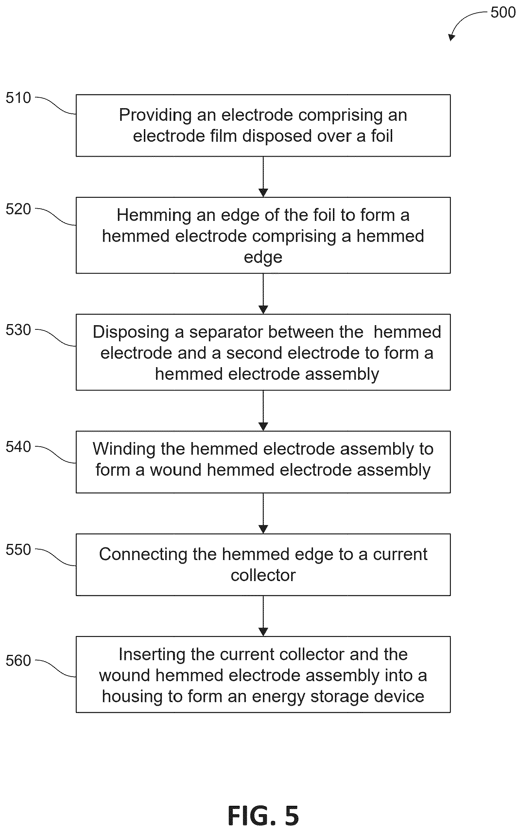

FIG. 5 illustrates a method 500 of preparing a hemmed wound "jellyroll" electrode assembly. At step 510, the method includes providing an electrode comprising an electrode film disposed over a foil. At step 520, the method includes hemming an edge of the foil to form a hemmed electrode comprising a hemmed edge (e.g., by passing it over, or through, one or more machine elements). At step 530, the method includes disposing a separator between the hemmed electrode and a second electrode to form a hemmed electrode assembly. In some embodiments, the electrodes and/or separators may be continuous webs. At step 540, the method includes winding the hemmed electrode assembly to form a wound hemmed electrode assembly. In some embodiments, step 530 and step 540 may be performed sequentially or concurrently. In some embodiments, additional forming operations (e.g., to collapse hem loops or otherwise introduce volumetric compaction or electrical interface uniformity) may be performed on the wound hemmed electrode assembly. At step 550, the method includes connecting the hemmed edge to a current collector. At step 560, the method includes inserting the current collector and the wound hemmed electrode assembly into a housing to form an energy storage device.

In some embodiments, the method further includes flattening the hem loop geometries. In some embodiments, the method further includes forming at the core of the wound hemmed electrode assembly (i.e., enforcing circularity and cylindricity of innermost electrode and separator layers after the winding process). In some embodiments, the step 520 of hemming an edge of the foil to form the hemmed electrode is performed by a hemming roller. In some embodiments, the method also includes simultaneously flattening or ironing the first hemmed edge and a second hemmed edge of the foil. In some embodiments, the step of flattening the first hemmed edge and a second hemmed edge of the foil is performed via a pressed plate flattener, a sliding pin, cone, or dome-shaped flattener, rolling pin, cone, or dome-shaped flattener or a harmonic plate flattener. In some embodiments, the step of flattening the first hemmed edge and the second hemmed edge of the foil is performed by planar loading both the first hemmed edge and the second hemmed edge. In some embodiments, the step of flattening the first hemmed edge and the second hemmed edge of the foil is performed by line loading both the first hemmed edge and the second hemmed edge. In some embodiments, the step of flattening the first hemmed edge and the second hemmed edge of the foil is performed by point loading both the first hemmed edge and the second hemmed edge. In some embodiments, the step of flattening the first hemmed edge and the second hemmed edge of the foil is performed by dynamically planar loading both the first hemmed edge and the second hemmed edge. Advantageously, flattening the hemmed edges can create a substantially uniform (e.g. flat and void-free) interface for current collector joining and can increased contact area between adjacent layers of hemmed foil.

### Electrode Materials, Electrode Films, Electrodes and Energy Storage Devices

An active material (e.g., cathode active material, anode active material) may be used in the preparation of an electrode film and/or electrode for an energy storage device. In some embodiments, an electrode comprises a current collector and an electrode film.

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., LiFePO₄ or "LFP"), lithium manganese iron phosphate (e.g., LiMn_{0.6}Fe_{0.4}PO₄ or "LMFP"), lithium nickel manganese cobalt oxide (i.e., LiNiₓMn_{y}Co_{1-x-y}O₂ or "NMC"), lithium nickel cobalt aluminum oxide (i.e., LiNiₓCo_{y}Al_{z}O₂ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include LiFePO₄ (i.e., "lithium iron phosphate" and "LFP") and LiMn₁₋ₓFeₓPO₄ (i.e., "lithium manganese iron phosphate" and "LMFP") (e.g., LiMn_{0.6}Fe_{0.4}PO₄ or LiMn_{0.8}Fe_{0.2}PO₄). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, an electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, an electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film includes a binder. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, an electrode film is disposed on a current collector to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jellyroll). In some embodiments, the energy storage device is selected from the group consisting of a cylindrical energy storage device, a stacked prismatic energy storage device, and a spiral-wound prismatic energy storage device.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate (LiPF₆), lithium bis(trifluoromethanesulfonyl)imide (LiFSI), lithium tetrafluoroborate (LiBF₄), lithium perchlorate (LiClO₄), lithium bis(trifluoromethansulfonyl)imide (LiN(SO₂CF₃)₂), lithium trifluoromethansulfonate (LiSO₃CF₃), lithium bis(oxalato)borate (LiB(C₂O₄)₂), lithium bis(fluorosulfonyl)imide (LiN(SO₂F)₂, lithium difluoro(oxalato)borate (LiC₂BF₂O₄) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), and combinations thereof. In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed battery system. It is to be understood that the forms of disclosure herein shown and described are to be taken as representative embodiments. Equivalent elements, or materials may be substituted for those representatively illustrated and described herein. Moreover, certain features of the disclosure may be utilized independently of the use of other features, all of which is apparent to one skilled in the art after having the benefit of this description of the disclosure. Expressions such as "including", "comprising", "incorporating", "consisting of, "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense and should in no way be construed as limiting of the present disclosure. All joinder references (e.g., connected, associated, coupled, and the like) are only used to aid the reader's understanding of the present disclosure, and may not create limitations, particularly as to the position, orientation, or use of the elements disclosed herein. Therefore, joinder references, if any, are to be construed broadly. Moreover, such joinder references may not necessarily infer that two elements are directly connected to each other.

Additionally, all numerical terms, such as, but not limited to, "first", "second", "one", "another", or any other ordinary and/or numerical terms, should also be taken only as identifiers, to assist the reader's understanding of the various elements, embodiments, variations and/ or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed in certain cases, as is useful in accordance with a particular application.

For expository purposes, the term "horizontal" as used herein is defined as a plane parallel to the plane or surface of the floor of the area in which the device being described is used or the method being described is performed, regardless of its orientation. The term "floor" can be interchanged with the term "ground." The term "vertical" refers to a direction perpendicular to the horizontal as just defined. Terms such as "above," "below," "bottom," "top," "side," "front," "rear," "lateral," "higher," "lower," "upper," "over," and "under," are defined with respect to the horizontal plane, in use.

The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Although certain embodiments and examples have been described herein, it will be understood by those skilled in the art that many aspects of the systems shown and described in the present disclosure may be differently combined and/or modified to form still further embodiments or acceptable examples. All such modifications and variations are intended to be included herein within the scope of this disclosure. A wide variety of designs and approaches are possible. No feature, structure, or step disclosed herein is essential or indispensable.

For purposes of this disclosure, certain aspects, advantages, and novel features are described herein. It is to be understood that not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Moreover, while illustrative embodiments have been described herein, the scope of any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to the examples described in the present specification or during the prosecution of the application, which examples are to be construed as non-exclusive. Further, the actions of the disclosed processes and methods may be modified in any manner, including by reordering actions and/or inserting additional actions and/or deleting actions. It is intended, therefore, that the specification and examples be considered as illustrative only, with a true scope and spirit being indicated by the claims and their full scope of equivalents.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

The ranges disclosed herein also encompass any and all overlap, sub-ranges, and combinations thereof. Language such as "up to," "at least," "greater than," "less than," "between," and the like includes the number recited.

## Claims

1. An energy storage device, comprising
a wound hemmed electrode assembly comprising a hemmed electrode and a separator, wherein the hemmed electrode comprises:
a foil comprising a hemmed edge;
an electrode film disposed over the foil; and
a central core surrounded by the electrode film;
wherein a preceding winding of the hemmed edge contacts a succeeding winding of the hemmed edge;
a housing, wherein the wound hemmed electrode assembly is positioned within the housing; and
collector, wherein the collector is in electrical communication and mechanically attached to the hemmed edge.

2. A hemmed electrode, comprising:
an electrode film; and
a foil;
wherein the electrode film is disposed over the foil;
wherein the foil comprises a core edge, a can edge, and a hemmed edge disposed between the core and can edges; and
wherein the hemmed edge extends beyond a top edge of the electrode film.

3. The hemmed electrode of Claim 2, wherein the hemmed edge extends from the core edge to the can edge.

4. The hemmed electrode of Claim 2, wherein the hemmed edge comprises a teardrop shaped loop, wherein optionally the teardrop shaped loop is bent in a first direction.

5. The hemmed electrode of Claim 2, wherein the hemmed edge comprises a first loop and a second loop.

6. The hemmed electrode of Claim 5, wherein the first loop bends a first direction and the second loop bends the first direction, or wherein the first loop bends a first direction and the second loop bends a second direction.

7. An electrode assembly comprising:
the hemmed electrode of Claim 2; and
a second hemmed electrode;
wherein the hemmed edge of the hemmed electrode and a second hemmed edge of the second hemmed electrode are positioned on opposing ends of the electrode assembly.

8. A wound hemmed electrode assembly comprising:
the electrode assembly of Claim 7;
wherein the core edge is positioned at a central core of the wound electrode assembly and the can edge is positioned at an exterior side of the wound electrode assembly.

9. An energy storage device, comprising the wound hemmed electrode assembly of Claim 8 disposed within a can comprising a lid.

10. The energy storage device of Claim 9, further comprising an insulative tape positioned proximal to the hemmed edge.

11. A method of preparing a hemmed electrode, comprising:
providing an electrode comprising an electrode film disposed over a foil; and
hemming an edge of the foil to form a hemmed electrode comprising a hemmed edge.

12. The method of Claim 11, wherein hemming is performed by a hemming roller, or further comprising winding the hemmed electrode together with separator layers to form a wound hemmed electrode assembly.

13. The method of Claim 11, further comprising:
forming a hemmed electrode assembly from the hemmed electrode and one or more additional hemmed electrodes;
disposing a separator between the hemmed electrode and the one or more additional hemmed electrodes;
winding the hemmed electrode assembly to form a wound hemmed electrode assembly;
connecting the hemmed edge to a current collector; and
inserting the current collector and the wound hemmed electrode assembly into a housing to form an energy storage device.

14. The method of Claim 13, further comprising flattening the hemmed edge, optionally further comprising simultaneously flattening the hemmed edge of the electrode and a second hemmed edge of the one or more additional hemmed electrodes or wherein flattening is performed by a method selected from the group consisting of pressing, sliding, rolling, a harmonic flattening tool interface, and combinations thereof.

15. The method of Claim 13, further comprising shaping a core of the wound hemmed electrode assembly.
